**Europäisches Patentamt**

**European Patent Office**

**Office européen des brevets**

(19)

(11) Numéro de publication: **0 034 154
B1**

(12) **FASCICULE DE BREVET EUROPEEN**

(45) Date de publication du fascicule du brevet:
09.05.84

(51) Int. Cl.³: **B 65 G 1/04**

(21) Numéro de dépôt: **80901519.1**

(22) Date de dépôt: **18.08.80**

(86) Numéro de dépôt international:
**PCT/CH 80/00098**

(87) Numéro de publication internationale:
**WO 81/00552 (05.03.81** Gazette 81/6)

(54) **INSTALLATION D'ENTREPOSAGE.**

(30) Priorité: **21.08.79 FR 760679**

(43) Date de publication de la demande:
**26.08.81 Bulletin 81/34**

(45) Mention de la délivrance du brevet:
**09.05.84 Bulletin 84/19**

(84) Etats contractants désignés:
**AT DE FR GB LU NL SE**

(56) Documents cités:
**WO - A - 80/00690
DE - A - 1 936 978
DE - U - 1 872 374
FR - A - 1 400 536
FR - A - 2 036 682
FR - A - 2 174 163
FR - A - 2 188 432
GB - A - 576 627
US - A - 3 038 415
US - A - 3 730 358**

(73) Titulaire: **DURAFOURG & CIE., 84, rue de Genève,
CH-1000 Lausanne 16 (CH)**
Titulaire: **SIBONNE S.A., 4, route de Beaumont,
CH-1701 Fribourg (CH)**
Titulaire: **SCHINDLER, Claude, 14, rue du Conseil
Général, CH-1205 Genève (CH)**

(72) Inventeur: **SCHINDLER, Claude, 14, rue du Conseil
Général, CH-1205 Genève (CH)**

(74) Mandataire: **Meylan, Robert Maurice et al, c/o BUGNION
S.A. 10, route de Florissant Case Postale 375,
CH-1211 Genève 12 - Champel (CH)**

ACTORUM AG

## Description

La présente invention a pour objet une installation d'entreposage, en particulier, mais non exclusivement, pour l'entreposage de palettes porteuses de marchandises, comprenant une structure porteuse s'étendant sur au moins un étage et comportant des voies de déplacement formant un réseau orthogonal sur lequel sont disposés des chariots en nombre tel qu'ils remplissent le réseau à l'exception d'au moins une rangée transversale, des moyens étant prévus pour déplacer longitudinalement et simultanément une partie au moins des chariots de manière à pouvoir dégager un chariot quelconque par le déplacement longitudinal, d'une rangée transversale à la rangée voisine, des chariots se trouvant d'un côté du chariot à dégager, dans la même rangée transversale et de tous les chariots se trouvant à côté de ces chariots, selon la direction longitudinale, du côté de la rangée transversale libre.

On connaît une telle installation (US-A-3 038 415) pour le parcage d'automobiles, dans laquelle des chariots munis de roues permettant leur déplacement selon une direction longitudinale, sont munis de crochets automatiques, à la manière de wagons de chemin de fer, des moyens d'entraînement étant prévus à l'extrémité de chaque rangée longitudinale pour entraîner le premier chariot de la rangée, à compter de ces moyens d'entraînement, et avec lui tous les chariots contigus de la rangée accrochés les uns aux autres. A l'emplacement de chaque crochet des chariots au repos est prévu un dispositif fixe muni d'un piston pour soulever le crochet du chariot et le décrocher du chariot voisin. Par une sélection judicieuse des pistons actionnés il est possible de déplacer un nombre choisi de chariots et de libérer ainsi le chariot auquel on veut accéder. Ce système est simple, mais pour libérer un chariot il est nécessaire de déplacer deux fois un nombre relativement et en moyenne élevé de chariots, une première fois dans un sens et une seconde fois dans l'autre sens. Lorsque la charge des chariots atteint 1 tonne ou davantage, l'énergie nécessaire pour effectuer ces déplacements est considérable. D'autre part, les crochets des chariots peuvent gêner un déplacement éventuel des chariots dans la direction transversale.

La présente invention a pour but de réduire l'énergie consommée pour dégager un chariot.

Dans l'installation selon l'invention telle que revendiquée, on déplace le plus souvent un nombre de chariots inférieur au nombre de chariots déplacés dans l'art antérieur et ce déplacement d'une rangée à l'autre n'a lieu qu'une seule fois, dans un seul sens. Les chariots sont déplacé individuellement.

Le problème posé par la présence des voies transversales a été résolu comme défini dans la revendication 1 par le déplacement en deux demi-pas, de telle sorte que les moyens d'entraînements entraînés en va-et-vient n'ont pas besoin d'effectuer un déplacement d'un espace libre à un autre quand bien même il est nécessaire de déplacer les chariots d'un espace libre à un autre.

On peut en outre déplacer un chariot dans la rangée transversale libérée, entre les autres chariots et entre d'éventuelles colonnes.

Il suffit en principe d'une seule rangée libre transversale pour toute une surface de stockage. Toutefois, si la longueur de l'entrepôt est relativement importante, on prévoira plusieurs couloirs libres de manière à éviter de devoir déplacer simultanément un trip grand nombre de chariots. Le chariot extrait de la surface de stockage laisse un emplacement vide dans lequel on peut immédiatement introduire un autre chariot.

La marchandise entreposée, que ce soit des palettes avec leur charge ou toute autre marchandise ou objet, est amenée sur les chariots et évacuée par des moyens conventionnels tels que tapis convoyeus, élévateur à norias, etc.

L'installation d'entreposage selon l'invention telle que revendiquée peut être utilisée pour l'entreposage de tout objet ou marchandise, et en particulier pour l'entreposage de véhicules dans un parking automatique.

Selon une forme d'exécution de l'invention, les chariots sont munis de deux trains de roues dont les axes sont perpendiculaires entre eux et dont les plans de roulement sont décalés verticalement, les voies de roulement destinées au roulement des chariots sur leur train de roues hautes présentant un dégagement pour les roues basses.

Selon une autre forme d'exécution, les chariots sont simplement munis de quatre patins glissant sur des surfaces lisses, éventuellement lubrifiées, ce qui permet sans autre de déplacer les chariots dans n'importe quelle direction et notamment dans les deux directions orthogonales du réseau. Dans le cas d'un entrepôt frigorifique, ces surfaces lisses peuvent être constituées par un liquide gelé, par exemple de l'eau.

Le dessin annexé représente, à titre d'exemple, une forme d'exécution de l'invention.

La figure 1 représente une vue partielle en perspective de la structure porteuse avec des chariots.

La figure 2 représente une vue en plan d'un croisement de voies.

La figure 3 représente une vue en élévation et en coupe selon III-III de la figure 2.

La figure 4 représente une vue en coupe selon IV-IV de la figure 2.

La figure 5 représente une vue en élévation, de côté, d'un chariot et de sa charge.

La figure 6 représente une vue partielle en élévation, de face, du même chariot, une coupe dégageant les roues.

La figure 7 est une vue en élévation illustrant le déplacement latéral des chariots.

La figure 8 représente une vue en plan, schématique, de deux chariots en position de repos.

La figure 9 représente une vue schématique en plan d'un chariot en mouvement, poussé ou tiré par un chariot robot.

Les figures 10, 11 et 12 représentent une variante d'exécution des voies et correspondent aux vues selon figures 2, 3 et 4.

La figure 13 représente une variante d'exécution, à patins, de l'installation.

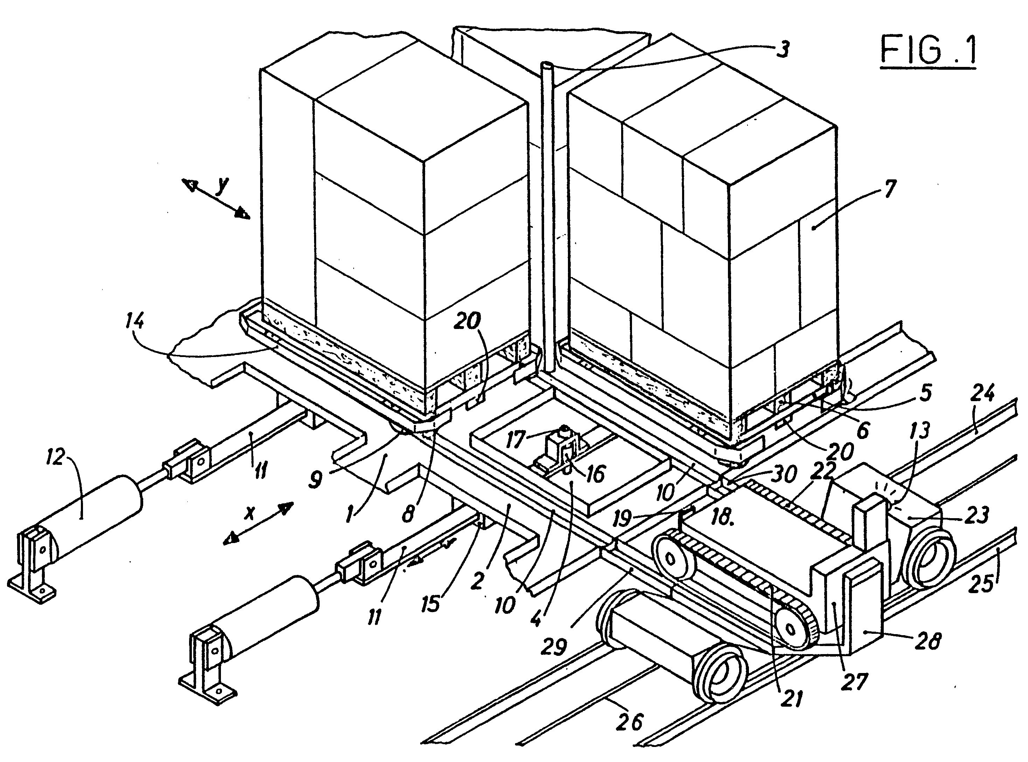

On se réfère à la figure 1. La structure porteuse est constituée d'un réseau de voies orthogonales 1 et 2 portées par des colonnes 3 fixées entre le sol et le toit d'un entrepôt et susceptibles de porter plusieurs structures porteuses disposées sur plusieurs étages.

Entre les voies 1 et 2 subsistent des espaces libres rectangulaires 4. Sur la structure porteuse peuvent se déplacer des chariots 5 destinés à porter une charge, ici des palettes 6 avec leur charge 7. Les chariots 5 sont munis de deux trains de quatre roues 8 et 9 dont les axes sont respectivement perpendiculaires entre eux, le plan de roulement des roues 8 étant situé plus bas que le plan de roulement des roues 9. Les roues 8 permettent aux chariots de rouler sur les voies 1 dans la direction x, tandis que les roues 9 permettent aux chariots de rouler sur les voies 2, dans le sens y. Lorsque le chariot roule sur la voie 2 sur son train de roues 9, les roues 8 se déplacent librement dans des canaux de dégagement 10 s'étendant le long des voies 2. En position de repos, c'est-à-dire de stockage, chaque chariot recouvre un espace libre 4. Les chariots 5 sont munis de deux côtés, de barres de butée 14 dont le fonctionnement sera décrit plus loin.

Par la suite on parlera de rangées longitudinales selon la direction x et de rangées transversales selon la direction y car le grand côté de la structure porteuse s'étendra généralement dans le sens x et le petit côté dans le sens y de manière à limiter la longueur de la rangée libre qui s'étend dans le sens y et par conséquent l'espace inoccupé, quoique des considérations d'ordre énergétique (masses à déplacer) peuvent faire opter pour une disposition inverse. Sous chaque rangée longitudinale de la structure porteuse s'étend une barre mobile 11 reliée à un vérin à double effet 12 fixé au bord de la structure porteuse.

Les barres 11 se déplacent dans une coulisse 15 fixée sous la structure et portent, en face de chaque espace libre 4, un dispositif d'entraînement pneumatique 16 comportant un doigt vertical mobile 17, sur lequel agit un ressort de rappel, non visible sur le dessin, qui a tendance à maintenir le doigt 17 en position basse. Comme ceci sera décrit plus loin, ce dispositif 16 est utilisé pour le déplacement longitudinal (x) des chariots 5. Chaque dispositif 16 est relié par un conduit à un circuit de commande pneumatique.

L'entraînement des chariots 5 dans le sens y est assuré par le chariot robot 18 muni à cet effet à l'avant d'un crochet 19 basculant et commandé électromagnétiquement et qui vient s'engager sous un moyen d'accrochage 20 du chariot constitué par une simple plaquette verticale ou un fer coudé. Le crochet 19 est animé d'un mouvement de recul après accrochage du chariot 5, pour une raison qui sera exposée plus loin. Tout autre moyen d'accrochage automatique connu peut être utilisé à cet effet. Ce dispositif d'accrochage peut n'être utilisé qu'en traction, le chariot 18 poussant simplement les chariots dans l'autre sens. Le chariot robot 18 est un chariot électrique muni d'accumulateurs. Il est équipé de deux chenilles 21 et 22 à forte adhérence, en caoutchouc ou en matière synthétique, qui lui permettent de se déplacer sur les voies 2, sur les mêmes lignes que les roues 9. Le chariot robot 18 est porté, au repos, par un second chariot robot 23 ou chariot porteur se déplaçant sur deux rails 24 et 25 disposés parallèlement à la structure porteuse. Le chariot porteur 23 est déplacé au moyen d'un câble 26 qui soutient en outre un câble d'alimentation en courant électrique pour la recharge des accumulateurs du chariot robot 18. A cet effet, ce chariot robot 18 présente en sa partie arrière 27 un moyen d'enfichage, mâle ou femelle, qui vient s'enficher dans un moyen d'enfichage homologue porté par une colonne 28 du chariot porteur 23 qui sert également de moyen de retenue du chariot robot 18. Le chariot porteur 23 est muni en outre de deux rails latéraux en U 29 et 30 dont la longueur est égale à la longueur d'un chariot 5, c'est-à-dire plus grande que la longueur représentée au dessin, ces rails étant destinés à recevoir et à supporter le chariot retiré de la structure porteuse de stockage pour son évacuation par le chariot porteur 23 et inversement, pour amener un chariot 5 dans la zone de stockage. L'arrêt du chariot robot 18 est commandé par un dispositif optoélectronique 13 coopérant avec les colonnes 3 et associé à un compteur. De tels dispositifs, réagissant lorsque leur faisceau lumineux est coupé par un objet proche, par exemple 200 à 300 mm, sont bien connus. Ils présentent l'avantage de ne pas nécessiter l'emploi d'une cellule réceptrice.

Le chariot robot 18 roule également dans les rails 29 et 30 lorsqu'il quitte son chariot porteur 23 pour rouler sur les voies 2. Le chariot porteur 23 s'arrête automatiquement, par un système d'indexage, devant la rangée transversale libérée.

Les barres 11 ont été représentées schématiquement. Elles sont avantageusement constituées par des rails présentant un profil en U aux ailes dirigées vers le bas, se déplaçant sur des galets à gorge montés dans les supports 15, et dans lesquels sont logés les conduits pour les dispositifs pneumatiques 16.

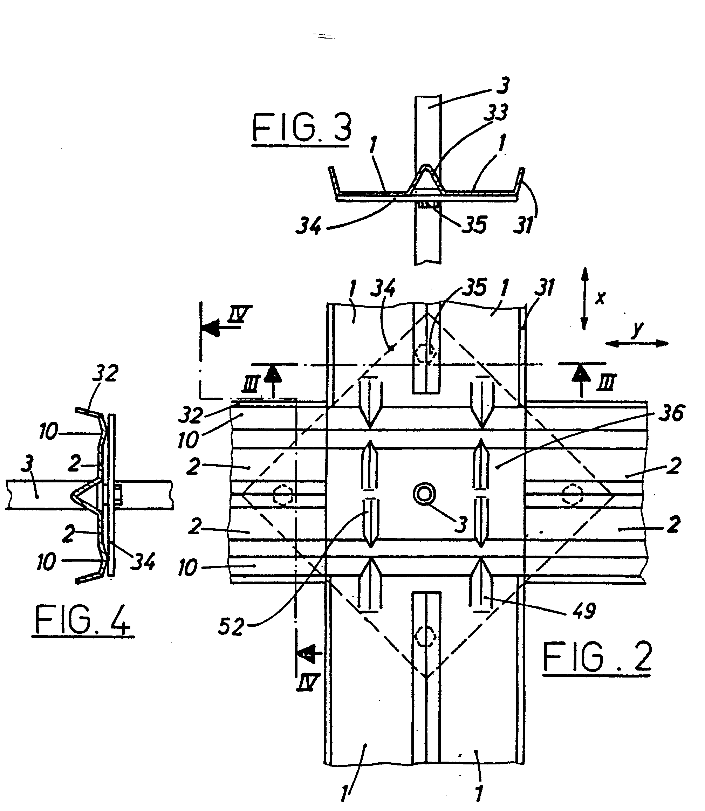

Les éléments de la structure porteuse représentée schématiquement à la figure 1 sont représentés plus en détail aux figures 2, 3 et 4. La figure 2 représente une vue en plan d'une intersection des chemins de roulement de deux voies 1 et 2, plus exactement de demi-voies. En effet, les chemins de roulement sont constitués de tôles profilées en double U 31 et 32 formant deux chemins de roulement, séparés par un pli central 33 donnant la rigidité nécessaire à la voie, pour deux voies parallèles. Les ailes latérales contribuent à la rigidité de la voie et constituent une sécurité pour le chariot. Les canaux de dégagement 10 ont un profil en V très ouvert dont la profondeur est juste suffisante pour dégager les roues basses 8, tout en permettant à ces roues 8 de remonter facilement sur les voies 1 en roulant sur une faible pente. Les éléments de voies sont assemblés très simplement en croix au moyen d'une plaque carrée 34 disposée en losange et fixée à la colonne porteuse 3 par tous moyens adéquats. La fixation est assurée au moyen de boulons 35. Le centre de la croix est constitué par une plaque carrée 36 sans nervure centrale de manière à assurer aussi bien le raccord entre les voies 2 qu'entre les voies 1. Le système est dons modulaire et peut se monter très rapidement. Il est en outre prévu des dépressions 49 pour les roues basses, dont le rôle sera décrit plus loin, et des dépressions 52 pour le positionnement en y des roues hautes 9.

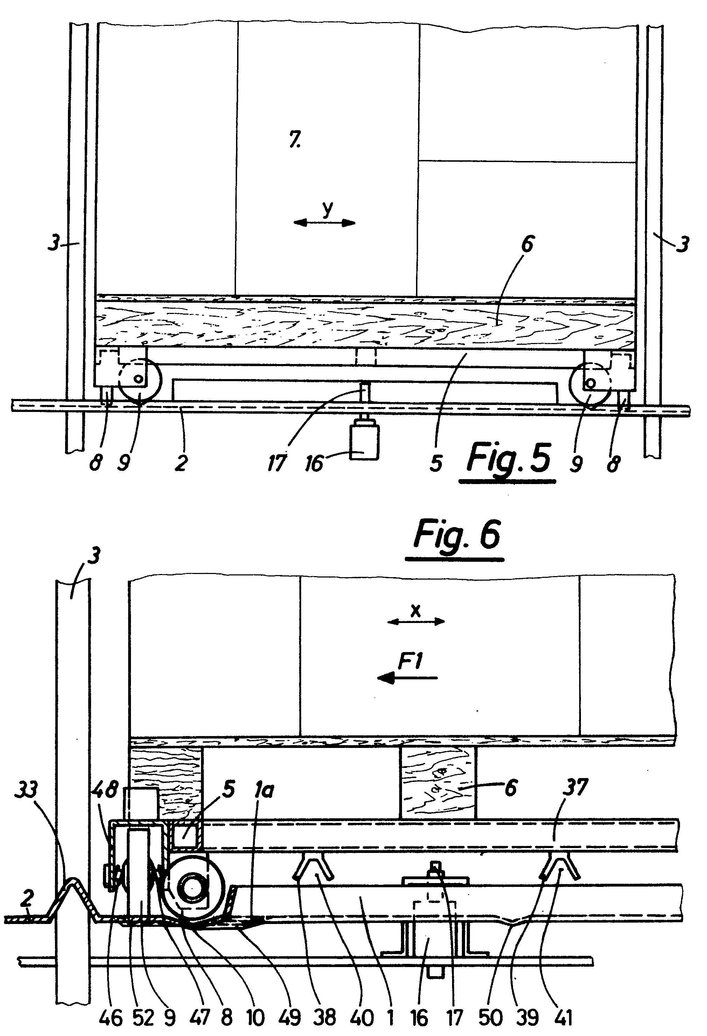

Les chariots 5 comportent un châssis tubulaire en acier (figures 5 et 6) muni d'une traverse médiane 37 sur laquelle sont fixés des moyens permettant l'entraînement longitudinal (x) du chariot, constitués par deux pièces métalliques formant un V 38 et 39, fixées à la traverse 37, respectivement et approximativement entre le centre du chariot et le bord de celui-ci.

Ces pièces 38 et 39 définissent deux logements en V 40 et 41.

A la figure 6 on voit que les roues hautes 9 sont montées librement sur leur axe, entre deux ressorts 46 et 47 dans une chape 48. Ce montage assure un jeu axial à la roue 9. Sur cette même figure on distingue la dépression 49 à l'endroit de la jonction de la voie 1 avec le canal de dégagement 10. Cette dépression 49 constitue un dégagement pour la roue 9 lorsque celle-ci est entraînée parallèlement à son axe lorsque le chariot se déplace sur un croisement dans le sens de la flèche F1. Lors de ce déplacement, lorsque les roues se trouvant à l'extrémité droite non représentée du chariot arrivent au croisement, les roues 8 doivent traverser le canal de dégagement 10 et descendent à cet effet dans ce canal. Les dégagements 49 empêchent alors les roues 9 de venir riper sur le chemin de roulement 1. En face des dégagements 49 se trouvent les dépressions 52 dans lesquelles viennent se loger les roues hautes 9, assurant ainsi le positionnement du chariot en y.

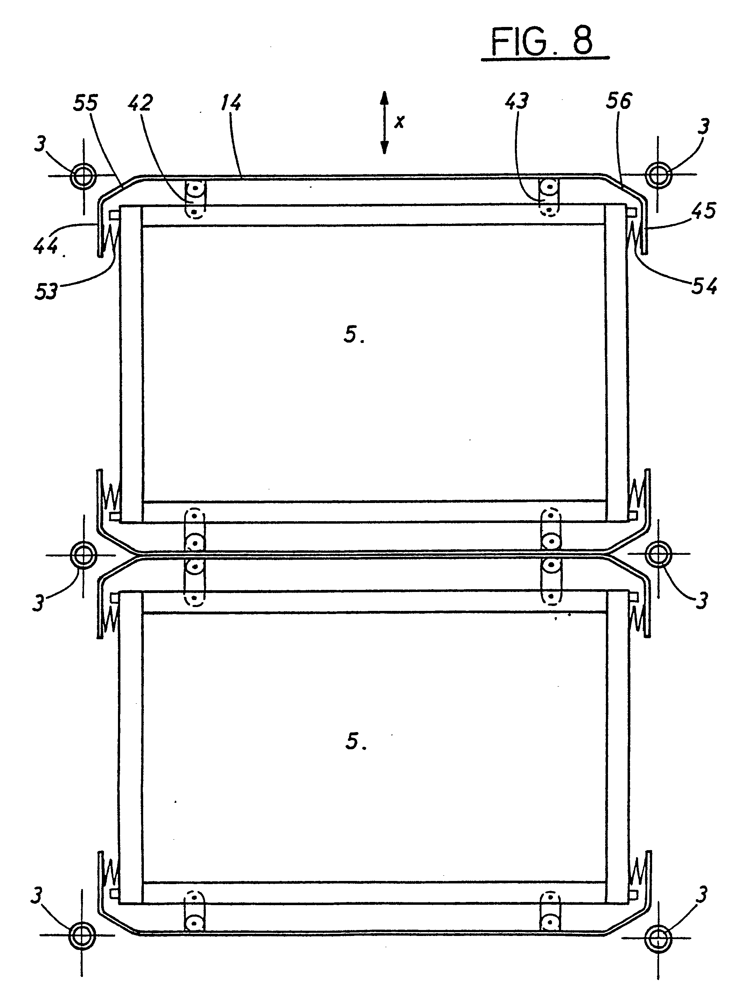

Les barres de butées 14 sont fixées aux chariots au moyen de deux biellettes 42 et 43 (fig. 8) à axes verticaux. Les extrémités 44 et 45 de chaque barre de butée sont coudées à 90°C. Entre ces extrémités et le chariot sont montés des ressorts 53 et 54 qui ont tendance à maintenir et à ramener la barre 14 dans la position représentée à la figure 8. Les parties coudées sont précédées d'une partie oblique 55 et 56 formant une rampe destinée à coopérer avec les colonnes 3 pour le guidage des chariots.

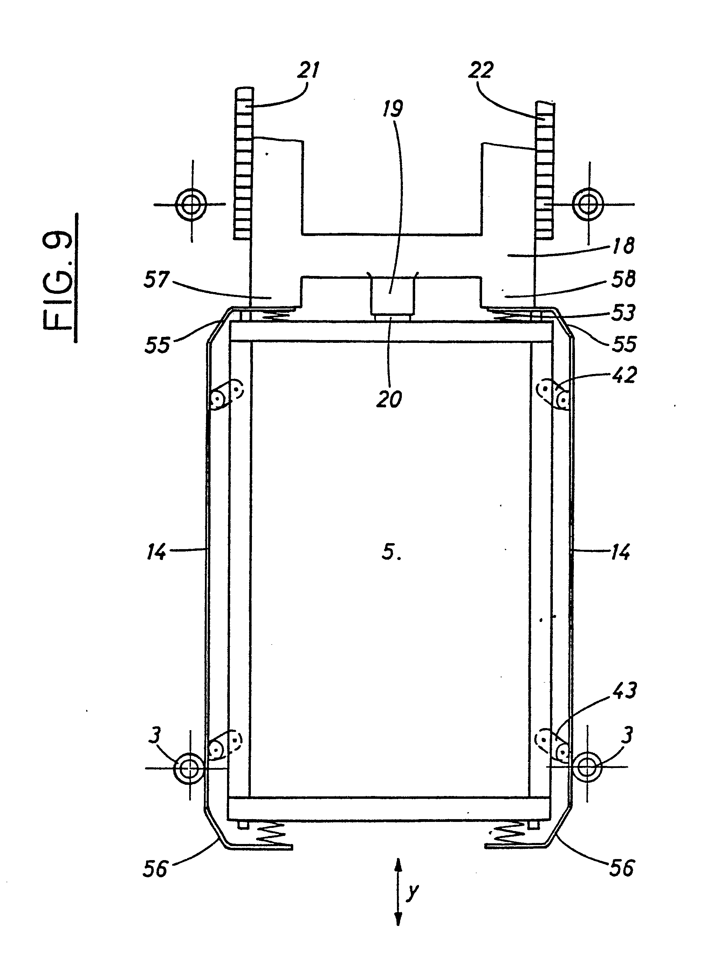

En position de repos (fig. 8) la largeur hors toute des chariots 5 est supérieure à la distance séparant deux colonnes 3. Les chariots ne peuvent donc pas passer de façon incontrôlée d'un emplacement à l'autre. Pour cela il est nécessaire que les barres de butées 14 soient rétractées comme représenté à la figure 9. Cette rétraction est obtenue par une pression exercée par le chariot robot 18. Lorsque celui-ci vient chercher un chariot 5 son crochet 18 vient accrocher le crochet 20 du chariot 5 et le tire à lui en repoussant les parties coudées des barres 14, par des butées 57 et 58, en comprimant les ressorts 53 ou 54. Les barres de butée 14 se déplacent en entraînant leurs biellettes 42 et 43, ce qui a pour effet de rapprocher les barres de butée du chariot, réduisant ainsi la largeur hors toute du chariot qui peut alors passer entre les colonnes 3 avec un jeu suffisant. Les rampes 55 et 56 viennent éventuellement buter contre l'une des colonnes 3 ce qui a pour effet de réaligner le chariot 5. Dès que le chariot robot 18 relâche le chariot 5, les barres de butée 14 de ce dernier reprennent leur position initiale et le chariot 5 est bloqué entre les colonnes selon l'axe y.

Les barres de butée 14 jouent leur rôle de butoir entre les chariots 5 dans la direction x. Dans cette direction les parties coudées 44 et 45 peuvent venir glisser contre les colonnes pour guider le chariot. Des moyens de rappel différents des ressorts 53 et 54 peuvent être envisagés tels que l'élasticité propre des barres avec fléchissement de celles-ci en un point quelconque ou la force de gravité en inclinant les biellettes.

L'installation fonctionne de la manière suivante:

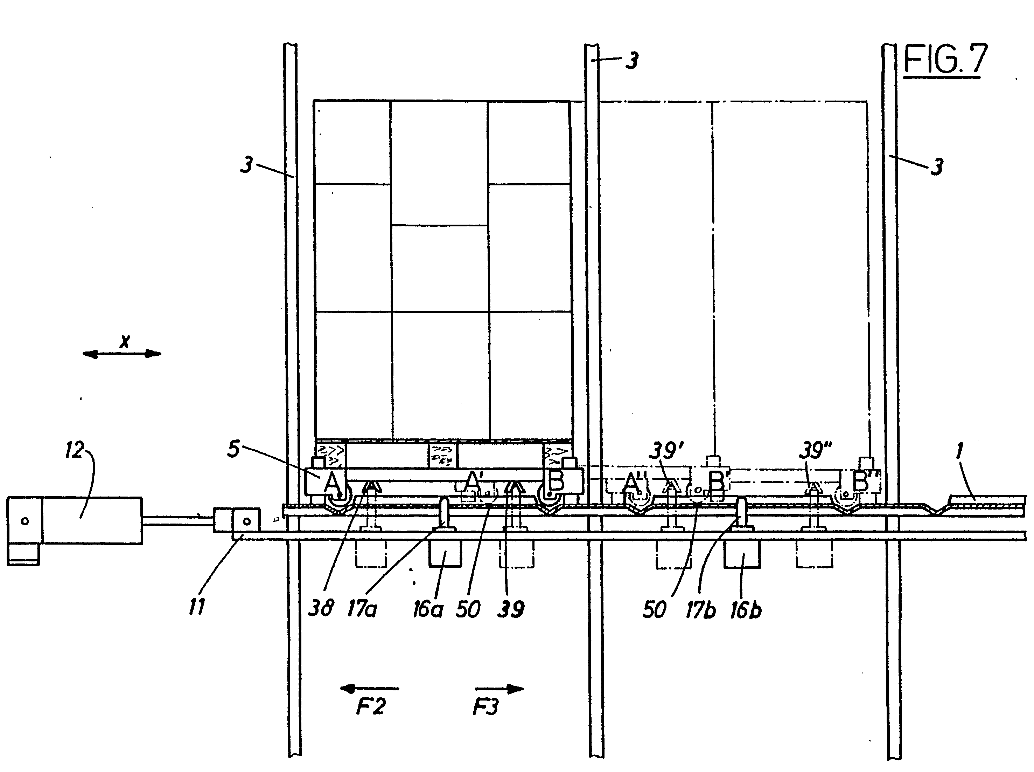

On laisse toujours au moins un couloir transversal (y) totalement libre. Supposons tout d'abord que l'on désire entreposer un chariot sur l'aire de stockage. Ce chariot et sa charge sont amenés au moyen du chariot porteur 23, sur ses rails 29 et 30 en face du couloir libre. Ce chariot est ensuite pousée par le chariot robot 18, télécommandé par tous moyens connus de la cybernétique, dans le couloir libre, jusqu'à ce qu'il se trouve en face d'un emplacement libre 4 bordant le couloir. L'arrêt du chariot robot 18 est commandé par son dispositif optoélectrique 13 et le compteur associé qui compte les colonnes. Le chariot 5, lâché par le chariot robot 18, est positionné par l'engagement de ses roues 9 dans les dépressions 52. Le chariot 5 est ensuite déplacé dans l'autre direction x au moyen de la barre 11 comme illustré à la figure 7. La position de départ est représentée en traits pleins, le chariot étant dans la position A-B. La barre 11 se trouvant sous le chariot à déplacer est tout d'abord entraînée dans le sens F2 par son vérin 12. En bout de course le doigt 17a se trouve en face du premier logement 38 et la commande pneumatique engage ce doigt dans le logement 38. La barre 11 est ensuite entraînée dans l'autre sens F3 en entraînant le chariot 5 dans la position A'-B' représentée en traits mixtes. Le second logement 39 se trouve alors dans la position 39'. Le chariot est libéré par le retrait du doigt 17a, mais il est toutefois suffisamment immobilisé dans cette position par une très légère dépression 50 formée dans la voie à l'emplacement des roues 8. La barre 11 se déplace à nouveau dans le sens F2 et le doigt 17b voisin vient s'engager dans le second logement 39, en position 39' pour entraîner le chariot dans le sens F3, pour l'amener dans la position A''-B''. Le déplacement se fait donc en deux demi-pas.

Pour retirer un chariot entreposé en un endroit quelconque de la surface de stockage, c'est-à-dire généralement d'un endroit qui ne se trouve pas en bordure du couloir libre, on procède de la manière suivante: au moyen des barres 11 et de leurs doigts 17, on déplace les chariots 5 se trouvant sur la rangée y de chaque côté du chariot à libérer, et avec eux les chariots se trouvant devant eux dans la direction x, en direction du couloir libre. Le résultat est un déplacement du couloir libre, le chariot à libérer se trouvant dans le couloir libre ainsi déplacé. Il suffit dès lors d'aller chercher ce chariot 5 au moyen du chariot robot 18, lequel, au moyen de son crochet automatique 19 vient accrocher le chariot 5 par son crochet 20 et vient le charger sur les rails 29 et 30 du chariot porteur 23, qui peut évacuer le chariot et sa charge sur les rails 24 et 25.

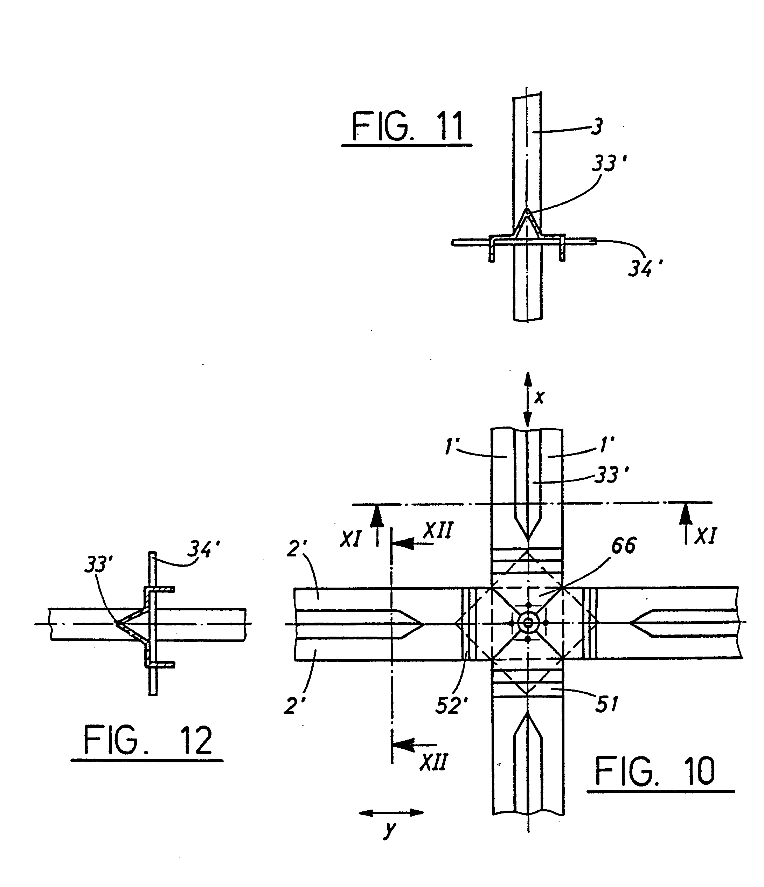

Les figures 10 à 12 représentent une forme d'exécution simplifiée des voies de roulement, forme qui sera adoptée de préférence. Selon cette forme d'exécution les voies 1' et 2' sont constituées par des tôles pliées identiques plus étroites que dans la forme d'exécution selon les figures 2 à 4. Les tôles sont pliées en U, leurs ailes dirigées vers le bas. Une nervure 33' sert à la fois au raidissement et comme rail de guidage. La jonction est réalisée directement entre ces tôles par leurs extrémités 66 en forme de coin fixées sur une plaque 34' solidaire de la colonne 3.

Les voies 1' présentent simplement une dépression en V ouvert 51 pour le passage des roues basses 8 lorsque le chariot se déplace sur les voies 2' sur ses roues hautes 9. Dans les autres positions les roues basses 8 sont à côté des voies 2'. Les dégagements 49 ne sont plus nécessaires. Les voies 2' présentent une dépression 52' pour le positionnement des chariots en y par ses roues 9.

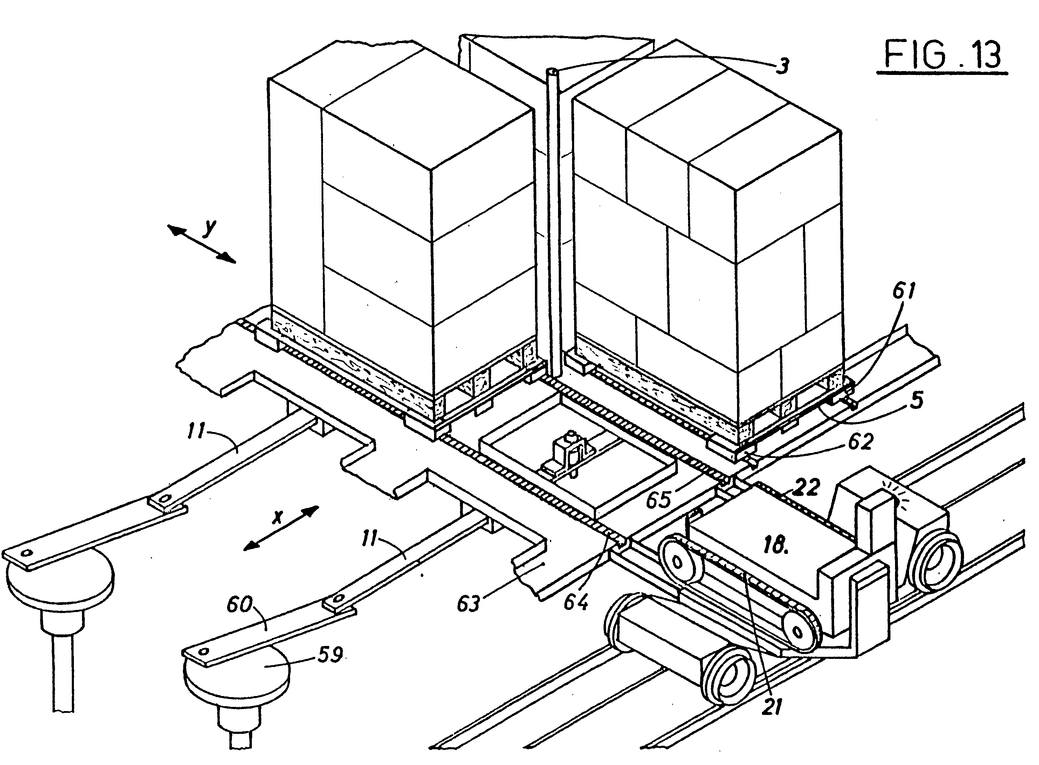

La figure 13 représente une variante d'exécution selon laquelle les chariots 5 sont simplement munis de patins tels que 61 et 62 et les voies sont constituées par une surface lisse 63 à très faible coefficient de frottement. Dans la direction y les voies sont munies de deux canaux 64 et 65, de préférence dentelés, destinés au déplacement des chenilles 21 et 22 du chariot robot 18. La largeur de ces canaux est inférieure à la largeur des patins, de telle sorte que ceux-ci peuvent passer par-dessus ces canaux. Les autres éléments sont les mêmes que ceux représentés à la figure 1 à l'exception de l'entraînement des barres 11 qui est ici assuré par des excentriques 59 et des bielles 60. Les matériaux constituant la surface lisse et les patins sont choisis complémentairement de façon à avoir le meilleur glissement possible. On peut choisir par exemple les combinaisons suivantes: acier sur TEFLON (marque déposée), bois huilé sur acier poli, nylon sur gel. Dans le cas d'un entrepôt frigorifique, il est possible de réaliser la surface glissante au moyen d'un liquide gelé, par exemple de l'eau.

Il est en outre intéressant de relever que la structure porteuse, avec ses colonnes 3, peut simultanément servir de structure porteuse du bâtiment de l'entrepôt.

De nombreuses variantes sont possibles sans sortir du cadre de l'invention telle que défini par les revendications. Pour l'entreposage de palettes il est par exemple possible de prévoir des chariots 5 ne se déplaçant que selon l'axe x, le chariot robot étant muni d'un élévateur à fourche pour venir saisir ou déposer les palettes sur les chariots. Ceci permet d'utiliser des chariots à 4 roues seulement et des voies plus simples. Les chariots peuvent être munis ou non de simples butoirs dans la direction x.

Les chariots ne doivent pas nécessairement être de forme rectangulaire ou carrée, mais peuvent présenter toute autre forme. Les chariots peuvent être conçus pour recevoir toute espèce de charge, notamment des charges sur feuilles glissantes (slip-sheet).

Les roues hautes et basses peuvent être interverties. Une telle interversion permet de réduire la force du vérin en prévoyant une dépression, limitée par deux rampes, entre les colonnes dans le sens x.

Les doigts 16 peuvent être commandés hydrauliquement, mécaniquement ou électriquement. Les vérins peuvent être remplacés par tout moyen équivalent. Au lieu des barres 11, il est en outre possible d'utiliser des chaînes.

Dans le cas de chariots munis de quatre roues seulement pour leur déplacement selon l'axe (x), la translation selon l'axe (y) peut être assurée en soulevant les chariots, par exemple au moyen d'un transpalette électrique dont les fourches, munies de roues, pénètrent sous le cadre du chariot, à l'extérieur des roues, entre celles-ci et les colonnes, soulèvent le chariot pour son transfert sur la voie de dégagement. Les colonnes peuvent être utilisées pour assurer le guidage du transpalette.

**Revendications**

1. Installation d'entreposage comprenant une structure porteuse s'étendant sur au moins un étage et comportant des voies de déplacement formant un réseau orthogonal (x, y) sur lequel sont disposés des chariots (5) en nombre tel qu'ils remplissent le réseau à l'exception d'au moins une rangée transversale (y), des moyens étant prévus pour déplacer longitudinalement (x) et simultanément une partie au moins des chariots de manière à pouvoir dégager un chariot quelconque par le déplacement longitudinal (x), d'une rangée transversale à la rangée voisine, des chariots se trouvant d'un côté du chariot à dégager, dans la même rangée transversale et de tous les chariots se trouvant à côté de ces chariots, selon la direction longitudinale (x), du côté de la rangée transversale libre, caractérisée par le fait que le réseau orthogonal de voies (1, 2) présente des espaces libres (4) entre les voies, que les chariots (5) occupent chacun, en position de repos, une surface recouvrant un espace libre (4), et que les moyens pour déplacer longitudinalement les chariots sont constitués, d'une part, par deux organes d'accouplement (38, 39) prévus sous chaque chariot, alignés selon la direction longitudinale (x) et situés respectivement approximativement à mi-distance entre le centre et chacune des extrémités du chariot, et, d'autre part, par des organes d'entraînement (11) s'étendant longitudinalement sous la structure porteuse, en face des espaces libres (4), reliés à des moyens d'entraînement en va-et-vient (12; 59, 60) et portant, en face de chaque espace libre, un dispositif d'accouplement (16, 17) destiné à s'accoupler avec l'un desdits organes d'accouplement (38, 39) des chariots, le déplacement des chariots d'une rangée transversale à la rangée voisine s'effectuant en deux demi-pas, par un mouvement de va-et-vient des organes d'entraînement (11), les dispositifs d'accouplement (17) entraînant d'abord les chariots d'un premier demi-pas par leurs premiers organes d'accouplement (38) lors d'un premier va-et-vient des organes d'entraînement, et entraînant ensuite les chariots d'un second demi-pas, par leurs seconds organes d'accouplement (39) lors d'un second va-et-vient des organes d'entraînement (11).

2. Installation selon la revendication 1, comprenant des chariots susceptibles d'être déplacés dans les deux directions orthogonales (x, y) caractérisée par le fait qu'elle comprend des moyens pour déplacer un chariot dans la direction transversale (y), ces moyens étant constitués par un premier chariot robot (18) pouvant rouler transversalement sur le réseau de voies (1, 2) pour l'introduction ou le retrait du chariot de l'aire de stockage, ce premier chariot robot étant lui-même porté, au repos, par un second chariot robot (23) susceptible de se déplacer sur une voie latérale (24, 25) disposée sur un côté longitudinal de la structure porteuse.

3. Installation selon la revendication 2, caractérisée par le fait que les chariots sont munis de deux trains de roues (8, 9) dont les axes sont perpendiculaires entre eux et dont les plans de roulement sont décalés verticalement, des dégagements (10; 51) étant prévus pour le passage des roues basses (8) lorsque les chariots roulent sur leurs roues hautes (9), de telle sorte que ces chariots peuvent se déplacer aussi bien transversalement que longitudinalement.

4. Installation selon la revendication 3, caractérisée par le fait que les chariots sont munis, le long de leur côté parallèle à la direction transversale (y) de barres de butée (14) montées sur deux biellettes (42, 43) à axes verticaux, de telle sorte qu'une poussée longitudinale sur ces barres a pour effet de rapprocher ces barres du chariot de manière à juste permettre le passage du chariot entre les colonnes (3) de la structure porteuse, des moyens de rappel étant prévus pour ramener ces barres de butées en position initiale écartée lorsque la poussée longitudinale cesse.

5. Installation selon la revendication 4, caractérisée par le fait que les barres de butée (14) sont coudées à leurs extrémités (44, 45) parallèlement aux autres côtés du chariot, les moyens de rappel étant constitués par des ressorts (53, 54) de compression montés entre les extrémités coudées et le chariot.

6. Installation selon la revendication 5, caractérisée par le fait que les parties coudées (44, 45) des barres de butée (14) sont précédées d'une partie oblique (55, 56) formant rampe de guidage des chariots lors de leur passage entre les colonnes (3) de la structure porteuse.

7. Installation selon la revendication 3, caractérisée par le fait que les roues hautes (9) ont un jeu axial.

8. Installation selon la revendication 3, caractérisée par le fait que les voies de roulement (1, 2) sont constituées de tôles profilées en U munies de nervures médianes (33') entre les croisements et formant chacune deux chemins de roulement (1', 2') pour deux voies parallèles, les tôles profilées des voies de roulement (1') pour les roues basses (8) présentant, au voisinage des croisements, des rigoles transversales (51) en forme de V très ouvert constituant lesdits dégagements pour les roues basses (8) de telle sorte que lorsque les roues basses (8) arrivent latéralement dans lesdites rigoles, les roues hautes (9) prennent contact avec leur chemin de roulement.

9. Installation selon la revendication 3, caractérisée par le fait que les voies de roulement (2) pour les roues basses présentent, à proximité desdits dégagements (10) et perpendiculairement à ceux-ci, des dégagements (49) pour les roues hautes (9) de longueur correspondant à la longueur de la descente des roues basses (8) dans lesdits canaux.

10. Installation selon la revendication 9, caractérisée par le fait que les voies de roulement (2) pour les roues hautes (9) présentent des dépressions (52) pour le positionnement des chariots en position de repos.

11. Installation selon la revendication 3, caractérisée par le fait que les voies de roulement (1; 1') pour les roues basses (8) comportent des dépressions (50) au moins à l'endroit où s'arrêtent les roues basses après le premier déplacement latéral d'un demi-pas.

12. Installation selon la revendication 1, caractérisée par le fait que les organes d'accouplement (36, 39) situés sous les chariots sont constitués par deux logements (40, 41) destinés à coopérer avec des doigts verticaux (17) mobiles verticalement, portés par les dispositifs d'accouplement des moyens d'entraînement.

13. Installation selon la revendication 1, caractérisée par le fait que lesdits organes d'entraînement (11) sont constitués par des barres ou des chaînes.

14. Installation selon la revendication 1 dans laquelle les chariots sont mobiles seulement longitudinalement et dans laquelle les charges reposent sur des palettes, caractérisée par le fait qu'elle comprend des moyens pour déplacer une charge dans la direction transversale (y), ces moyens étant constitués par un premier chariot robot (18) pouvant rouler transversalement sur le réseau de voies (1, 2) pour introduire ou retirer la charge de l'aire de stockage, le premier chariot étant équipé d'un élévateur à fourches pour la saisie des palettes et étant lui-même porté, au repos, par un second chariot robot (23) susceptible de se déplacer sur une voie latérale (24, 25) disposée sur un côté longitudinal de la structure porteuse.

15. Installation selon la revendication 2, caractérisée par le fait que les voies de déplacement sont constituées par des surfaces lisses (63) à faible coefficient de frottement et que les chariots sont munis de patins (61, 62), des canaux (64, 65) étant ménagés dans les voies transversales (y) pour le roulement du premier chariot robot (18), la largeur de ces canaux étant inférieure à la largeur des patins.

16. Installation selon la revendication 15, pour entrepôts frigorifiques, caractérisée par le fait que les surfaces lisses sont constituées par un liquide gelé.

17. Installation selon la revendication 2, caractérisée par le fait que le premier chariot robot (18) porte un dispositif optoélectrique (13) émettant un faisceau lumineux coopérant avec les colonnes (3) de la structure porteuse pour la commande de l'arrêt du chariot robot.

**Patentansprüche**

1. Speicheranlage mit einer Trägerstruktur, die sich über mindestens ein Gebäudestockwerk erstreckt und in einem rechtwinkligen Gitternetz (x, y) verlaufende Verschiebebahnen aufweist, auf sich Wagen (5) in einer solchen Anzahl befinden, dass sie das Verschiebebahnnetz bis auf wenigstens eine Querreihe (y) ausfüllen, sowie mit Einrichtungen zur gleichzeitigen Längsverschiebung (x) wenigstens eines Teiles dieser Wagen, um einen beliebigen Wagen herauszuholen, und zwar durch Längsverschiebung (x) aus einer Querreihe in die benachbarte Querreihe von den Wagen, die sich auf einer Seite vor dem herauszuholenden Wagen in derselben Querreihe befinden, sowie aller anderen Wagen neben diesen Wagen in Längsrichtung (x) nach der freien Querreihe hin, dadurch gekennzeichnet, dass das rechtwinklige Netz von Verschiebebahnen (1, 2) freie Räume (4) zwischen den Bahnen aufweist, dass die Wagen (5) in Ruhestellung jeder eine einen freien Raum (4) abdeckende Fläche einnimmt und dass die Einrichtungen zur Längsverschiebung der Wagen einerseits aus zwei Kupplungen (38, 39) unter jedem Wagen bestehen, die in Längsrichtung (x) ausgerichtet und jeweils in etwa halbem Abstand zwischen der Mitte und jedem Ende des Wagens angeordnet sind, sowie andererseits aus Antrieben (11) in Längsrichtung unter der Trägerstruktur gegenüber den freien Räumen (4), die mit einer hin- und hergehenden Antriebsmechanik (12; 59, 60) verbunden sind und gegenüber jedem freien Raum einen Kupplungsteil (16, 17) zum Ankuppeln an eine der Wagenkupplungen (38, 39) tragen, wobei die Verschiebung der Wagen von einer Querreihe in die benachbarte Reihe in zwei Halbschritten durch eine Hin- und Herbewegung der Antriebe (11) erfolgt, indem die Kupplungsteile (16, 17) zunächst die Wagen um einen ersten Halbschritt mittels ihrer ersten Kupplung (38) bei einer ersten Hin- und Herbewegung der Antriebe verschieben und dann um einen zweiten Halbschritt mittels ihrer zweiten Kupplung (39) bei einer zweiten Hin- und Herbewegung der Antriebe (11).

2. Anlage nach Anspruch 1 mit Wagen, die in beiden rechtwinkligen Richtungen (x, y) verschiebbar sind, dadurch gekennzeichnet, dass die Einrichtungen zur Verschiebung eines Wagens in Querrichtung (y) aus einem ersten Hilfsschlitten (18) bestehen, welcher quer auf dem Netz der Verschiebebahnen (1, 2) rollen kann, um den Wagen auf seine Lagerfläche zu bringen oder hiervon wegzuziehen und welcher selbst in Ruhestellung von einem zweiten Hilfsschlitten (23) getragen wird, der auf einer Seitenbahn (24, 25) entlang einer Längsseite der Trägerstruktur verschiebbar ist.

3. Anlage nach Anspruch 2, dadurch gekennzeichnet, dass die Wagen mit zwei Radsätzen (8, 9) versehen sind, deren Achsen rechtwinklig zueinander angeordnet und deren Rollebenen vertikal gegeneinander versetzt sind, und dass Ausnehmungen (10; 51) für den Durchgang der tieferen Räder (8) vorgesehen sind, wenn die Wagen auf ihren höheren Rädern (9) laufen, so dass sich die Wagen sowohl quer als auch längs verschieben können.

4. Anlage nach Anspruch 3, dadurch gekennzeichnet, dass die Wagen längs ihrer Seite parallel zur Querrichtung (y) mit Stossstangen (14) an jeweils zwei Hebelarmen (42, 43) mit vertikaler Achse versehen sind, so dass ein Stoss in Längsrichtung gegen diese Stangen eine solche gegenseitige Annäherung dieser Wagenstossstangen bewirkt, dass der Durchgang des Wagens zwischen den Säulen (3) der Trägerkonstruktion gerade ermöglicht wird, und dass Rückholeinrichtungen vorgesehen sind, um diese Stossstangen in ihrer Ausgangslage auseinanderzudrücken, sobald der Längsstoss aufhört.

5. Anlage nach Anspruch 4, dadurch gekennzeichnet, dass die Stossstangen (14) an ihren Enden (44, 45) parallel zu den anderen Seiten des Wagens umgebogen sind und die Rückholeinrichtungen aus Druckfedern (53, 54) zwischen den umgebogenen Stangenenden und dem Wagen bestehen.

6. Anlage nach Anspruch 5, dadurch gekennzeichnet, dass vor den umgebogenen Teilen (44, 45) der Stossstangen (14) ein abgeschrägter Teil (55, 56) vorhanden ist, welcher eine Führungsrampe der Wagen bei ihrem Durchgang zwischen den Säulen (3) der Trägerstruktur bildet.

7. Anlage nach Anspruch 3, dadurch gekennzeichnet, dass die höheren Räder (9) ein axiales Spiel haben.

8. Anlage nach Anspruch 3, dadurch gekennzeichnet, dass die Verschiebebahnen (1, 2) aus U-förmig profilierten Blechschienen mit Mittelrippen (33') zwischen den Kreuzungen bestehen und jede Schiene zwei parallele Rollbahnen (1', 2') bildet, wobei die Profilbleche der Rollbahnen (1') für die tieferen Wagenräder (8) an den Kreuzungen mit Querrinnen (51) in Form eines sehr offenen V versehen sind, welche die Ausnehmungen für die tieferen Räder (8) in der Weise bilden, dass, sobald diese tieferen Räder seitlich an diesen Rinnen ankommen, die höheren Wagenräder (9) auf ihrer Rollbahn (2') aufsetzen.

9. Anlage nach Anspruch 3, dadurch gekennzeichnet, dass die Rollbahnen (1) für die tieferen Wagenräder (8) an den Ausnehmungen (10) und rechtwinklig hierzu mit Ausnehmungen (49) für die höheren Räder (9) versehen sind, deren Länge dem Absenkungsweg der tieferen Räder (8) in diese Ausnehmungen entspricht.

10. Anlage nach Anspruch 9, dadurch gekennzeichnet, dass die Rollbahnen (2) für die höheren Wagenräder (9) mit Einsekungen (52) zum Halten der Wagen in Ruhestellung versehen sind.

11. Anlage nach Anspruch 3, dadurch gekennzeichnet, dass die Rollbahnen (1; 1') für die tieferen Wagenräder (8) mit Einsenkungen (50) wenigstens an der Stelle versehen sind, wo die tieferen Räder nach der ersten seitlichen Verschiebung um einen Halbschritt anhalten.

12. Anlage nach Anspruch 1, dadurch gekennzeichnet, dass die Wagenkupplungen (38, 39) unter den Wagen zwei Öffnungen (40, 41) zur Aufnahme vertikaler Zapfen (17) aufweisen, welche vertikal beweglich und Teile der Kupplungen (16) an den Antrieben (11) sind.

13. Anlage nach Anspruch 1, dadurch gekennzeichnet, dass die Antriebe (11) aus Stangen oder Ketten bestehen.

14. Anlage nach Anspruch 1, wobei die Wagen nur in Längsrichtung (x) beweglich sind und die Ladung auf Paletten ruht, dadurch gekennzeichnet, dass Einrichtungen zur Verschiebung einer Ladung in Querrichtung (y) mit einem ersten Hilfsschlitten (18) vorgesehen sind, welcher quer auf dem Verschiebebahnnetz rollen kann, um die Ladung auf die Lagerfläche zu bringen oder hiervon abzuziehen, und mit einem Gabelstapler zum Erfassen der Paletten ausgestattet ist und welcher selbst in Ruhestellung von einem zweiten Hilfsschlitten (23) getragen wird, der auf einer Seitenbahn (24, 25) entlang einer Längsseite der Trägerstruktur verschiebbar ist.

15. Anlage nach Anspruch 2, dadurch gekennzeichnet, dass die Verschiebebahnen aus glatten Flächen (63) mit geringem Reibungskoeffizient bestehen und die Wagen mit Gleitkufen (61, 62) versehen sind, wobei Kanäle (64, 65) in den Querbahnen (y) als Rollführung für den ersten Hilfsschlitten angeordnet sind, deren Breite geringer ist als die Breite der Wagenkufen.

16. Anlage nach Anspruch 15 für Gefrierlager, dadurch gekennzeichnet, dass die glatten Flächen aus einer gefrorenen Flüssigkeit bestehen.

17. Anlage nach Anspruch 2, dadurch gekennzeichnet, dass der erste Hilfsschlitten (18) ein optoelektronisches Gerät (13) trägt, welches ein Lichtstrahlbündel aussendet und mit den Säulen (3) der Trägerstruktur zusammenarbeitet, um das Anhalten des Hilfsschlittens zu steuern.

## Claims

1. A storage plant comprising a supporting structure extending over at least one level and comprising a plurality of tracks constituting an orthogonal network (x, y) on which a plurality of carriages (5) are disposed, the number of said carriages being such that they fill the network except at least transverse row (y), means for moving longitudinally (x) and simultaneously at least one fraction of said carriages to permit the removal of any carriages by shifting longitudinally (x), from one transverse row to the next row, carriages lying on one side of the carriage to be removed in the same transverse row and all the carriages disposed on one side of these carriages in the longitudinal direction (x), on the side of the free transverse row, characterized by the fact that the orthogonal network of tracks (1, 2) comprises free spaces (4) between the tracks, that each carriage (5) occupies in its inoperative position an area overlying a free space (4) and that the means for moving the carriages longitudinally consist on the one hand of two coupling members (38, 39) located underneath each carriage, aligned in the longitudinal direction (x) and disposed half-way between the centre and each end of the carriage, and on the other hand of driving members (11) extending longitudinally beneath the supporting structure in front of said free spaces (4), said driving members being connected to actuators (12, 59, 60) for moving said members to-and-fro, said driving means carrying in front of each free space a coupling device (16, 17) adapted to be coupled with one of said coupling members (38, 39) of said carriages, the shifting of the carriages from one transverse row to the next row taking place in two half-steps, by moving the driving members (11) to-and-fro, the coupling devices (17) diving firstly the carriages over one half-step through their first coupling members (38) during a first to and fro movement of said driving members, and then the carriage over a second half-step through their second coupling members (39) during a second to and fro movement of the driving member (11).

2. A storage plant according to claim 1, comprising carriages adapted to travel in both orthogonal directions (x, y), characterized by the fact that it comprises means for shifting a carriage in the transverse direction (y) which consist of a first automatic carriage (18) adapted to roll transversely on said track network (1, 2) for delivering the carriage to or retracting the carriage from the storage area, said first automatic carriage being carried in turn, when inoperative, by a second automatic carriage (23) adapted to travel on a lateral track (24, 25) extending along a lontidudinal side of the supporting structure.

3. A storage plant according to claim 1, characterized by the fact that the carriages are provided with two sets of wheels (8, 9) having their axes extending at right angles to each other and their rolling planes shifted vertically to each other, clearances (10, 51) being provided for the passage of the lower wheels (8) when the carriages roll on their upper wheels (9), whereby said carriage can travel in both transverse and longitudinal directions (y, x).

4. A storage plant according to claim 3, characterized by the fact that said carriages are provided, along their sides parallel to the transverse direction (y), with shock absorbers (14) mounted on a pair of links (42, 43) having vertical axes, whereby a longitudinal thrust exerted on said shock absorbers will cause said shock absorbers to move toward the carriage to the extent just necessary to permit the passage of the carriage between the posts (3) of the supporting structure, return means being provided for restoring said shock absorbers to their initial position somewhat spaced from the relevant carriage when said longitudinal thrust is discontinued.

5. A storage plant according to claim 4, characterized by the fact that said shock absorbers (14) consist of section members having bent end portions (44, 45) parallel to the other sides of the carriage, said return means consisting of coil compression springs (53, 54) disposed between said bent end portions (44, 45) and the carriage.

6. A storage plant according to claim 5, characterized by the fact that between said bent end portions (44, 45) and said shock absorbers (14), ramp-forming oblique portions (55, 56) are provided for guiding the carriage during their passage between the posts (3) of said supporting structure.

7. A storage plant according to claim 3, characterized by the fact that said upper wheels (9) are mounted with a certain axial play.

8. A storage plant according to claim 3, characterized by the fact that said tracks (1, 2) consist of substantially U-sectioned sheet-metal members provided with a central rib (33') between the crossings, so as to provide two races (1', 2') for two parallel tracks, the section members of the tracks (1') intended for the lower wheels (8) comprising adjacent the crossing areas, transverse channels (51) having a wide-angle V-shaped cross-section constituting said clearances for the lower wheels (8), whereby when said lower wheels (8) engage said channels laterally the upper wheels (9) engage their races.

9. A storage plant according to claim 3, characterized by the fact that said races (1) for the lower wheels (8) are provided, in the vicinity of and across said clearances (10), with other clearances (49) for said upper wheels (9), said other clearances (49) having a length consistent with the length of the downward movement of said lower wheels (8) when they engage said channels.

10. A storage plant according to claim 9, characterized by the fact that said races (2) for the upper wheels (9) are provided with concavities (52) for positioning the carriages in their inoperative position.

11. A storage plant according to claim 3, characterized by the fact that said races (1; 1') for said lower wheels (8) are provided with concavities (50) at least where the lower wheels are caused to stop subsequent to the first half-step lateral movement.

12. A storage plant according to claim 1, characterized by the fact that said coupling members (38, 39) disposed underneath the carriages consist of a pair of recesses (40, 41) adapted to be engaged by vertical catch-pins (17) adapted to move vertically and carried by the coupling means of said driving means.

13. A storage plant according to claim 1, characterized by the fact that said driving members (11) consist of bars or chains.

14. A storage plant according to claim 1, wherein said carriages are movable only in the longitudinal direction and the loads are supported by pallets, characterized by the fact that it comprises means for moving a load in the transverse direction (y), said means consisting of a first automatic carriage (18) adapted to roll transversely on said track network (1, 2) for introducing the load into or extracting same from, the sorage area, the first carriage being provided with a fork lift for picking up the pallets and being carried in turn, when inoperative, by a second automatic carriage (23) adapted to travel on a side track (24, 25) disposed on a longitudinal side of the supporting structure.

15. A storage plant according to claim 2, characterized by the fact that said tracks consist of plain surfaces (63) having a low coefficient of friction and that the carriages are provided with skids (61, 62), channels means (64, 65) being formed in the transverse tracks (y) for receiving the wheels of said first automatic carriage (18), said channels being narrower than the skid width.

16. A storage plant according to claim 15, for cold-storage warehouses, characterized by the fact that said plain surfaces consist of a frozen liquid.

17. A storage plant according to claim 2, characterized by the fact that said first automatic carriage (18) carries an optoelectronic device (13) capable of emitting a light beam cooperating with the posts (3) of said supporting structure for controlling the stoppage of said automatic carriage.

FIG .1

FIG. 3

FIG. 4

FIG. 2

**Fig. 5**

**Fig. 6**

FIG.7

FIG. 8

# FIG. 9

FIG. 11

3

33'

34'

x

1'

1'

33'

XI

XI

XII

2'

66

2'

52'

51

XII

FIG. 10

33'

34'

FIG. 12

y

FIG.13